(19) **Europäisches Patentamt**

**European Patent Office**

**Office européen des brevets**

(11) **EP 1 557 640 A2**

(12) **EUROPEAN PATENT APPLICATION**

(43) Date of publication:
27.07.2005 Bulletin 2005/30

(51) Int Cl.⁷: **G01B 21/06**, B07C 5/04,
G01B 11/04

(21) Application number: **04028663.5**

(22) Date of filing: **03.12.2004**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Patton, Mark E.**<br>**Dryden New York 13053 (US)** |
| (30) Priority: **20.01.2004 US 761001** | (74) Representative: **Petruzziello, Aldo et al**<br>**Racheli & C. S.p.A.**<br>**Viale San Michele del Carso, 4**<br>**20144 Milano (IT)** |
| (71) Applicant: **BorgWarner Inc.**<br>**Auburn Hills, MI 48326-2782 (US)** | |

(54) **Part length measurement technique using two or three proximity sensors**

(57)     The invention pertains to the field of measurement of the length of a part, and more particularly, using two or more proximity sensors. Therefore a method for determining the range of a dimensional parameter of a multiplicity of members is provided. The method includes the steps of: providing at least two sensors; fixing a set constant distances between the sensors such that the relative distances between sensors are fixed and free from adjustment; and measuring the dimensional parameter based upon a ratio of a first time segment and a second time segment, whereby no adjustment of the relative distance between sensors is required.

Fig. 1

## Description

### FIELD OF THE INVENTION

The invention pertains to the field of measurement of the length of a part. More particularly, the invention pertains to part measurement technique using two or more proximity sensors.

### BACKGROUND OF THE INVENTION

It is known to use a single sensor for measuring the length of a part. US patent 5,430,665 teaches an apparatus and method for measuring length of moving elongated object.

Further, it is also known to use multiple sensors, wherein at least one sensor needs to be adjusted in relation to the other sensors for measuring a part having a specific length. For example, it is known to use multiple sensors in a line to measure length, in which system relies on precise positioning to measure length.

However, for the above types of known measurements, the sampling rates of even the fastest of these systems was not adequate to dynamically measure the length of a moving pin. For accurate measurements the pins had to be held static momentarily. Since the minimum rates were determined to be 10 or more parts per second, the concept of static sampling is not practical. Because no cost effective off-the-shelf sensor or sensor systems were capable of measuring pin length within the tolerances required and at the rates required, therefore a new measuring method or system is needed.

### SUMMARY OF THE INVENTION

A method for determining the length of a multiplicity of individual parts using at least 2 sensors where the relative distance between the 2 sensors is fixed in that the relative distance is not adjusted during the determining step.

A method for determining the range of a dimensional parameter of a multiplicity of members is provided. The method includes the steps of: providing at least two sensors; fixing a set constant distances ($\Delta 1$) between the sensors such that the relative distances between sensors are fixed and free from adjustment; and measuring the dimensional parameter based upon a ratio ($\Delta t_2 / \Delta t_1$) of a first time segment ($\Delta t_1$) and a second time segment ($\Delta t_2$), whereby no adjustment of the relative distance between sensors is required.

A method for determining the range of a dimensional parameter of a multiplicity of members is provided. The method includes the steps of: providing at least two sensors including a first sensor and a second sensor; fixing a set of constant distances ($\Delta 1$) between the sensors including at least one distance between the first sensor and the second sensor, such that the relative distances between sensors are fixed and free from adjustment during the sensors' sensing operation; and measuring the dimensional parameter based upon a ratio ($\Delta t_2 / \Delta t_1$) of a first time segment ($\Delta t_1$) and a second time segment ($\Delta t_2$), whereby no adjustment of the relative distance between sensors is required.

A method for determining the range of a dimensional parameter of a multiplicity of members is provided. The method includes: providing two sensors, including a first sensor and a second sensor; fixing a constant distance ($\Delta 1$) between the a first sensor and a second sensor such that the relative distances between sensors are fixed and free from adjustment; moving the multiplicity of members relative to the two sensors; predetermining a point on each member; recording a first time segment ($\Delta t_1$); recording a second time segment ($\Delta t_2$); and computing a dimension of the member.

### BRIEF DESCRIPTION OF THE DRAWINGS

Fig. 1 shows a part measurement system of the present invention.

Fig. 2 shows a set of measured signals for proposed two sensor or proximity switch length measurement technique of the present invention.

Fig. 3 shows an alternative embodiment of the present invention.

Fig. 3b shows the signals available from the 3 sensor technique.

Fig. 4 shows a diagrammatic depiction of a pin length selection system.

Fig.5 shows the prototype installation on a V-track that is automatically fed from a vibrating bowl feeder.

Fig. 6 shows sorting program in operation.

### DESCRIPTION OF THE PREFERRED EMBODIMENT

This section includes the descriptions of the present invention including the preferred embodiment of the present invention for the understanding of the same. It is noted that the embodiments are merely describing the invention. The claims section of the present invention defines the boundaries of the property right conferred by law.

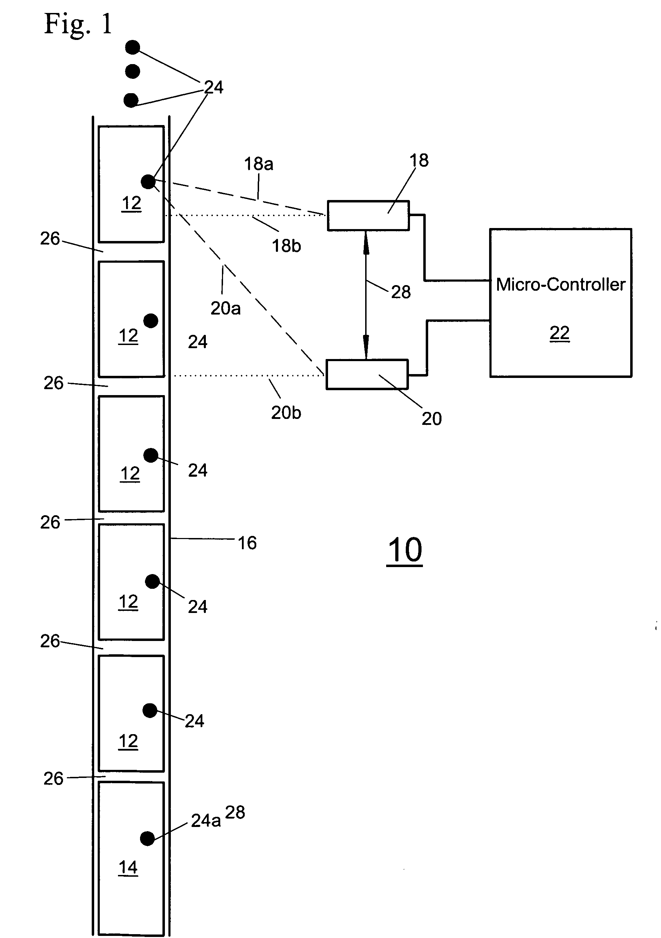

Referring to Fig. 1, a part measurement system 10 is shown. The purpose of the system is to quickly or efficiently measure a multiplicity of parts which comprises desired parts as well as undesirable parts. As shown, a multiplicity of parts 12 and some undesired foreign parts 14 are provided for measurement. The parts 12 and undesired foreign parts may be movably traveling through a channel 16 which form a physically constricting means for channeling parts 12 and parts 14 for desired measurement. Note that channel 16 may not be needed in that parts 12 and parts 14 may be free falling from one area to another area and during the free falling period be measured by system 10. Foreign parts 14 are parts inadvertently or undesirably got mixed together with parts 12. This mixing together may include production error of parts. As can be seen, the variations of parts 12 and parts 14 can be very small in the context of the total dimension of parts 12 and parts 14 respectively.

Foreign parts 14 are parts which need to be first identified and preferably later taken out according to the teachings of the present invention. A plurality of sensors including first sensor 18 and second sensor 20 are stably positioned in relation to the parts including multiplicity of parts 12 and some undesired foreign parts 14, which move in relation to the sensors, i.e. first sensor 18 and second sensor 20. A controller 22 is coupled to the sensors for processing the sensed information. By stably positioned, it means that the distance 28 between first sensor 18 and second sensor 20 is a constant at least during the parts measurement process or period. In other words, distance 28 may be adjustable, but during the parts measurement distance 28 is fixed or is a constant. This adjustability is desirable in that for a measurement of a different part dimension, it is preferable to adjust or change distance 28 to correspond to the different part dimension. By way of an example, if a pin length is the thing subject to measurement, distance 28 can be adjusted to be substantially identical to the pin length in order to have a more efficient measurement. However, it needs to be made clear that a key provision of this technique is that the distance 28 is not critical to the function of the system. That is what makes the technique of the present invention different from other methods like the one described in the Background section of the present invention. It needs to be stressed that in the description supra, the positioning of the sensors need only be approximate for this technique to work. In other words, absolute accurate positioning of the distance between the sensors are not required. Of course, proper positioning can increase the accuracy and repeatability but that is only required for very special situations. In its basic form this technique is independent of the sensor location relative to each other.

This is especially true when the multiplicities of pins are moving at high speed. For detailed discussion, see infra.

A set of receivers may be provided for receiving the sensor signals coming from the sensors. Note that only two sensors i.e. sensor 18 and sensor 20, with their respective receivers, i.e. receiver 18a and receiver 20a are shown. The set of receivers and their sensors are each coupled to the microcontroller 22 respectively. Note that receivers such as receiver 18a and receiver 20a may not be needed in the present invention. For example, when the sensors are reflective sensors, receivers may not be needed.

It is noted that the distance between the parts (i.e. gap 26) is irrelevant to the function of the technique of the present invention. It is the presence, not the absence of parts as a single part passes the sensors that are being sensed.

In most sensor systems, the sensor therein may be directed to sense at only a predetermined direction. In other words, all the sensors involved do not need to be focused upon point 24. For example, as indicated by the dotted line 18b and 20b described supra respectively, a non-focused system is depicted. It is noted that by "focused", it is meant that the sensors have their respective sensing points as one identical point. In other words, by "focused", it is meant that the sensors sensing directions are focused at a single point. For example, at the instant as shown in Fig.1, sensor 18 has its sensing rays 18b blocked by pin 12 such that receiver 18a cannot received communication coming from sensor 18. At this juncture, a different signal (or first signal) is fed to microprocessor 22. when a sensor can communicate with its receiver such as shown in the figure with regard to sensor 20 in which sensing rays 20b is received by receiver 18a due to the crevice or the junction 26 between pins (in this example, between two pin 12), a second signal is fed to microprocessor 22. As such, system 10 is disposed to know information relating to the length of pin 12 or pin 14, and thereby processing the same according to the teachings of the present invention. One way to process the information is to record the time periods that have elapsed with regard to the sensors, be they first sensor 18, second sensor 20 or third or fourth sensors (not shown) if required.

Alternatively, sensor 20 may have a built in receiver (not shown) which performs similar functions as receiver 20a in feeding information back to microcontroller 22. Sensor 18 may constitute substantially identical receiver therein for similar purposes.

Furthermore, the positioning between the sensors is fixed and independent of the part length. In other words, any distance between any two points with one point on one sensor and the other point on the other sensor is a constant. There exists a fixed distance 28 between sensor 18 and sensor 20. Distance 28 is a constant. The present invention contemplates a set of sensors for sensing parts 12, 14 in which the sensors are positioned such that no relative movement of any sensor is required.

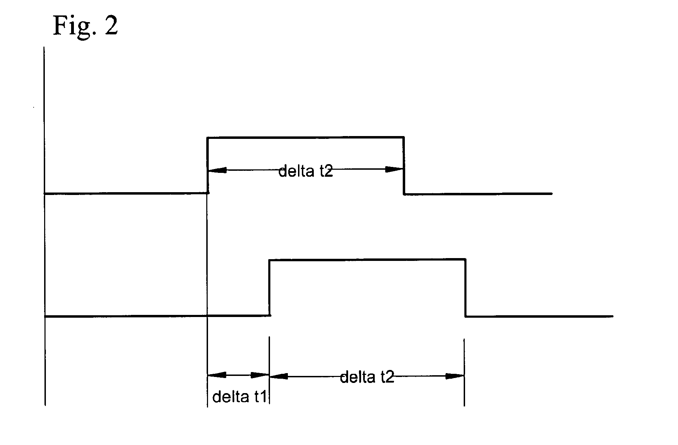

Referring to Fig. 2, a method of processing the information sensed according to Fig. 1 is shown. More specifically, a set of measured signals for proposed two proximity switch length measurement technique is shown. $\Delta l$ is defined as the distance between the sensors switches, such as distance 28 of Figure 1. Further, $\Delta l$ is a known value in that it is fixed at least during measurement. Therefore, we can calculate the pin velocity:

$$V_{pin} = \frac{\Delta l}{\Delta t_1}$$

wherein $\Delta t_1$ is the time segment from a point in which the length of a part (such as a pin) entering a first sensor range until the point is sensed by a second sensor. As can be seen, since $\Delta l$ is a known value, $V_{pin}$ is dependent upon the variations of $\Delta t_1$.

Using this velocity we arrive at or can calculate the pin length, $l_{pin}$ as:

$$l_{pin} = V_{pin} \times \Delta t_2 = \Delta l \left( \frac{\Delta t_2}{\Delta t_1} \right)$$

wherein $\Delta t_2$ is the time segment required for the length of a part (such as a pin) to pass a single sensor, be it the first sensor18 , the second sensor 20, or other extra sensors.

It is noted that velocity of the moving parts such as the pins may not be a constant. In other words, the velocity may a variable or function that change with the passing of time. If this is the case, some adjustments are required. The adjustment includes changing the ratio ($\Delta t_2 / \Delta t_1$). It is noted that high velocity is an important feature taking into consideration by the present invention. A working definition of "high" velocity is that the speed at which the parts subject to measurement pass a sensor (or sensors) so fast that effective measurements using known means are in sufficient. For example, a "low" velocity, one may merely use a single sensor for measurement. The sensor may even be the naked eye of humans.

Since the value of $\Delta l$ is fixed, the measured pin length is proportional to the ratio

$$(\Delta t_2/\Delta t_1),$$

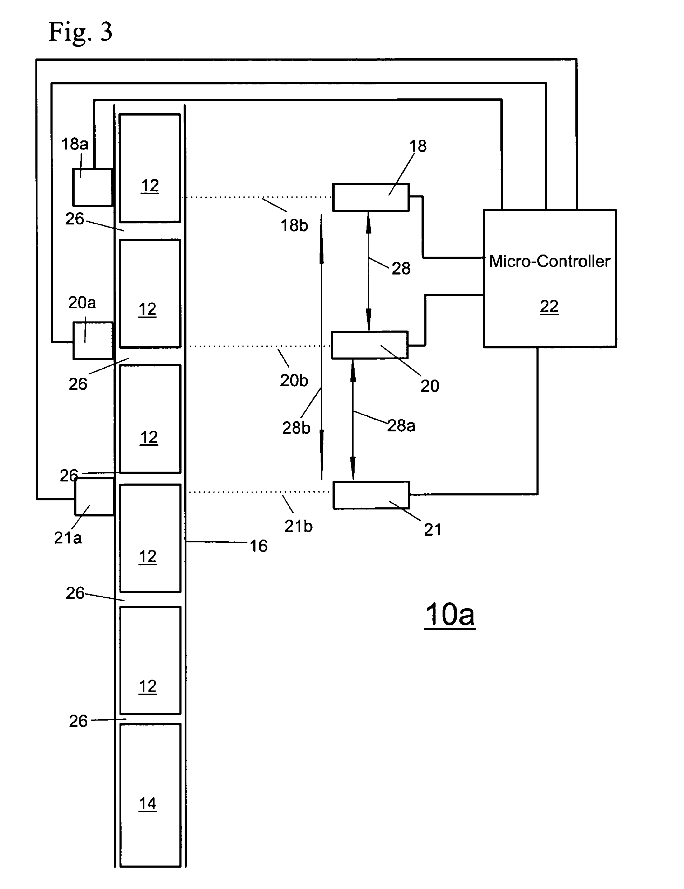

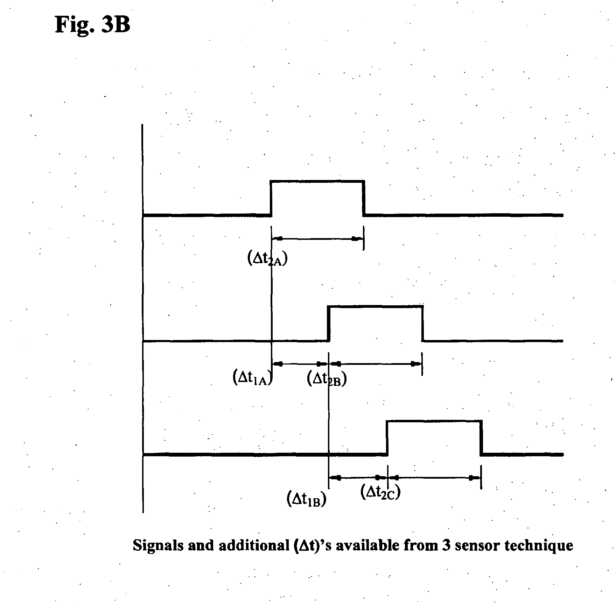

Referring to Fig. 3, an alternative embodiment 10a of the present invention is shown. In addition to the elements shown in Fig. 1, a third sensor 21 is added, which in turn has sensing ray 21b directed at pins for sensing variations thereto. A receiver 21 a may be provided for receiving ray 21 a from sensor 21. Alternatively, sensor 21 may have a built in receiver (not shown) which performs similar functions as receiver 21 a in feeding information back to microcontroller 22.

Additionally, a third sensor 21 is provided. Sensor 21 may sense parts via a focused sense line 21 a that being focused upon a single point on the moving parts 12, 14. As can be appreciated, the single point 24 is also the point being focused by sensor 18 and sensor 20. Alternatively, sensor 21 may have a non-focused sensing line 21b.

During measurement, sensor 21 has a fixed position thereby its relative distance to sensor 18 and sensor 20 is a pair of constants respectively. In other words, distance 28a or distance 28b is respectively of a fixed value or constants. It is noted that in a three dimensional condition, the sensors may not be mounted along a straight line. That is to say, the value of distance 28b may not be the sum total of the values of distance 28 and distance 28a.

As can be seen, for three or more sensor systems such as system 10a, the relationships between information sensed by each sensor are more elaborate. In other words, each sensor has its own $\Delta t_2$ and $\Delta t_1$. For any one of the more than three sensor, instead of only one other sensor for correlation purpose, more than one sensor is involved. As can be seen, this allows for multiple and alternate calculations of the ratio ($\Delta t_2/\Delta t_1$) and can produce a more robust approach to length sensing. This is especially true when the parts are changing velocity over the sensor separation length (28, 28b).

For example, in Fig. 3b which shows the signals available from the 3 sensor technique and the additional available ($\Delta t$) values are available for alternate calculations.

It is noted that in the ideal condition, two sensors are theoretically sufficient for the present invention. The distance between the two sensors is preferably set to equal the parts length subject to measurement. However, due to the fixed distance nature of the present invention, parts length subject to measurement cannot always be the same. Further factors involved are the error in measurement inherent in any sensor, the velocity of the movement of the parts subject to measurement, and the length or dimensional difference between the desired parts and the undesired parts, etc. Therefore, more than two sensors may be introduced thereby more parameters can be measured and thereby provided more row data for a improved accuracy in the measurement of the present invention.

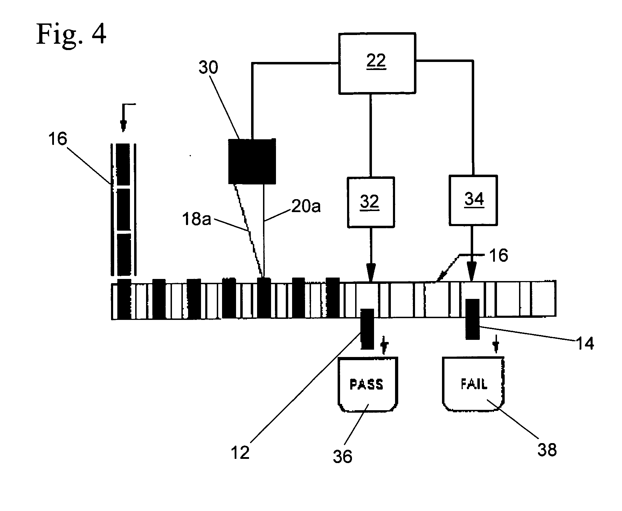

Referring to Fig. 4, a diagrammatic depiction of a pin length selection system is shown. Parts to be tested pass through channel 16. Note that the parts can be desired parts 12 as well as undesired parts 14. The parts, while in channel 16, are sensed by sensor unit 30, which may include first sensor 18, and second sensor 20, or other sensors (not shown). Actuators such as first actuator 32 and second actuator 34 are provided for selectively collecting desired parts 12 in a pass container and parts 14 in a fail container. First actuator 32 and second actuator 34 each respectively receives command from microprocessor 22 and is informationally coupled thereto. The following is an example that evaluates several variations on this concept of the present invention. The hardware involved includes

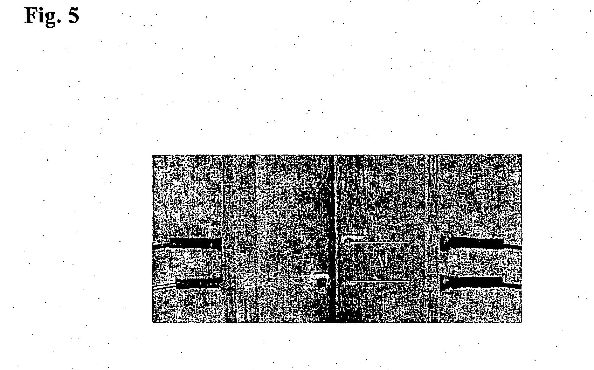

Fig. 5 shows the prototype installation on a V-track that is automatically fed from a vibrating bowl feeder. A microcomputer was programmed to interpret the sensor output and calculate the ($\Delta t_2 /\Delta t_1,$) ratio.

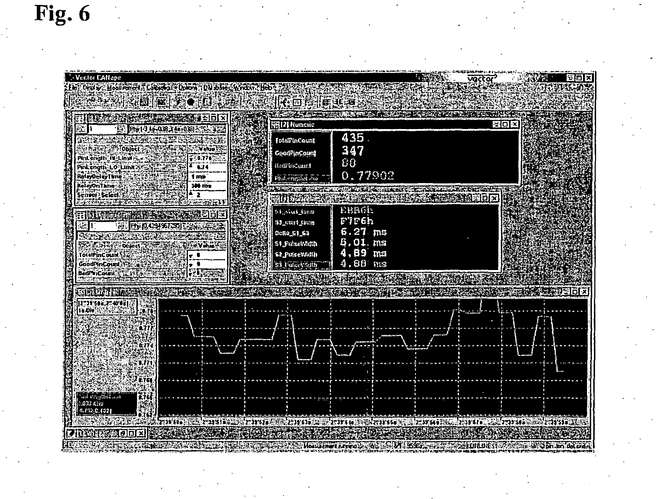

Fig. 6 shows sorting program in operation. At this time testing is ongoing on this technique but initial results indicate that the method is quite accurate with proper sensor orientation and setup. As discussed supra, the fact that sensor positioning is not critical to the basic function of this system. of course better results can be achieved by modifying the sensor position but it is also found that at high speed, repeatable sensors are better and that proper part presentation can also improve the accuracy and repeatability. By way of an example, repeatability of ±0.0005" has been demonstrated for pin speeds up to 35 inches per second. Additional testing will consider throughput capabilities and long term durability of the system for offline pin sorting in the production environment. Note the graphic window therein for easy user determination.

The present invention contemplates that any number of members having a physical dimension can be measured using the method described supra. Of course a means need be provided to move the members relative to at least two sensors.

Accordingly, it is to be understood that the embodiments of the invention herein described are merely illustrative of the application of the principles of the invention. References herein to details of the illustrated embodiments are not intended to limit the scope of the claims, which themselves recite those features regarded as essential to the invention.

**Claims**

1. A method for determining the range of a dimensional parameter of a multiplicity of members, comprising:

    providing at least two sensors including a first sensor and a second sensor;

    fixing a set of constant distances ($\Delta 1$) between the sensors including at least one distance between the first sensor and the second sensor, such that the relative distances between sensors are fixed and free from adjustment during the sensors' sensing operation; and

    measuring the dimensional parameter based upon a ratio ($\Delta t_2 / \Delta t_1$) of a first time segment ($\Delta t_1$) and a second time segment ($\Delta t_2$), whereby no adjustment of the relative distance between sensors is required.

2. The method of claim 1, wherein the first time segment ($\Delta t_1$) is a duration of time starting when a first sensor starts recording as a fixed point of a member among the multiplicity of members, and ending when a second sensor starts recording as the fixed point of the member.

3. The method of claim 1, wherein the second time segment ($\Delta t_2$) is a duration of time required for the length of a member to pass a single sensor among the at least two sensors.

4. A method for determining the range of a dimensional parameter of a multiplicity of members, comprising:

    providing two sensors, including a first sensor and a second sensor;

    fixing a constant distance ($\Delta 1$) between the a first sensor and a second sensor such that the relative distances between sensors are fixed and free from adjustment;

    moving the multiplicity of members relative to the two sensors;

    predetermining a point on each member;

    recording a first time segment ($\Delta t_1$);

    recording a second time segment ($\Delta t_2$); and

    computing a dimension of the member.

5. The method of claim 4, wherein the dimension of the member comprises the length of the member.

6. The method of claim 4, wherein the first time segment ($\Delta t_1$) is the time segment from a point in which the length of member entering the first sensor range until the point is sensed by the second sensor.

7. The method of claim 4, wherein the second time segment ($\Delta t_2$) is the time segment required for the length of the to pass a single sensor, wherein the sensor is the first sensor or the second sensor.

Fig. 1

Fig. 2

delta t2

delta t2

delta t1

Fig. 3

Micro-Controller

**22**

**10a**

**Fig. 3B**

$(\Delta t_{2A})$

$(\Delta t_{1A})$    $(\Delta t_{2B})$

$(\Delta t_{1B})$    $(\Delta t_{2C})$

**Signals and additional ($\Delta$t)'s available from 3 sensor technique**

Fig. 4

**Fig. 5**

Fig. 6